# DEMANDE DE BREVET EUROPEEN

(11) **EP 4 390 439 A1**
(43) Date de publication de la demande: **26.06.2024**
(21) Numéro de dépôt: 23206412.1
(22) Date de dépôt: 27.10.2023
(51) Int. Cl.: G01S 7/04, G01S 7/12, G01S 17/933

(54) **PROCEDE ET SYSTEME DE DETECTION D'OBSTACLES AVEC UN CAPTEUR D'OBSTACLES POUR UN AERONEF A VOILURE TOURNANTE**

(30) Priorité: 19.12.2022 FR 2213799
(71) Demandeur: Airbus Helicopters, 13725 Marignane Cedex (FR)
(72) Inventeur: NICOLAS, Dorothée, 31300 TOULOUSE (FR); GIANNI, Frederick, 31500 TOULOUSE (FR); DAMIANI, Nicolas, 13008 MARSEILLE (FR)
(74) Mandataire: GPI Brevets

(57) **Abrégé**

La présente invention concerne un procédé de signalisation des obstacles présents dans un espace environnant un aéronef. Ce procédé comporte : acquisition (STP1) avec au moins un capteur d'obstacles LIDAR de données de positionnement dans un référentiel du capteur d'obstacles, construction (STP2) durant ledit vol d'une carte en trois dimensions dudit espace environnant (60) dans un référentiel de cartographie et positionnement dudit aéronef dans ladite carte en appliquant un traitement de localisation et cartographie simultanées à partir au moins desdites données de positionnement , affichage (STP3) durant ledit vol sur un afficheur d'un symbole d'aéronef et d'une représentation en deux dimensions d'au moins une partie de ladite carte, chaque point affiché de ladite représentation étant affiché selon une charte graphique prenant en considération le niveau de risque associé.

## Description

La présente invention concerne un procédé et un système de détection d'obstacles avec un capteur d'obstacles pour un aéronef à voilure tournante.

Un aéronef peut comporter un ou des systèmes afin d'éviter une collision en vol avec le relief ou un objet distinct du relief, tel qu'un immeuble, un pylône, un câble, une grue ou autres. Le terme « obstacle » utilisé par la suite fait référence à tout élément susceptible d'entrer en collision avec un aéronef, le terme obstacle couvrant non seulement le relief mais aussi tout objet distinct du relief susceptible d'entrer en contact avec un aéronef.

Un système désigné sous l'acronyme « GPWS » en langue anglaise pour « Ground Proximity Warning System », permet d'alerter le pilote de l'aéronef de la proximité du sol.

Des systèmes d'aide au pilotage sont connus sous l'acronyme en langue anglaise « TAWS » pour « Terrain Avoidance Warning System » ou l'expression française « système d'avertissement et d'alarme d'impact ».

Ces systèmes TAWS permettent d'indiquer, au fur et à mesure de leur rapprochement, les obstacles connus situés en avant de la trajectoire de l'aéronef. Ces systèmes TAWS peuvent comporter notamment une fonction d'évitement d'obstacles désignée par l'acronyme en langue anglaise « FLTA » pour « Forward-Looking Terrain Avoidance ». En raison des spécificités des aéronefs à voilure tournante, des systèmes d'avertissement et d'alerte d'impact ont été adaptés pour ces aéronefs à voilure tournante et sont connus sous l'acronyme en langue anglaise « HTAWS » correspondant à l'expression anglaise « Helicopter Terrain Avoidance Warning System ». L'acronyme TAWS est utilisé par la suite aussi bien pour un système TAWS que pour un système HTAWS.

Un système TAWS peut ainsi comprendre un dispositif de localisation de l'aéronef dans l'espace aérien, une base de données d'obstacles répertoriant des obstacles connus à savoir le relief, voire des objets connus différents du relief. Dès lors, le système TAWS peut avoir un afficheur qui représente, en deux dimensions, les obstacles connus listés dans la base de données d'obstacles et situés aux alentours de l'aéronef. Le système TAWS peut en outre générer une alerte si l'aéronef risque d'impacter un obstacle. Un tel système TAWS peut être qualifié de « passif » dans la mesure où ce système sollicite une base de données d'obstacles existante.

Un tel système TAWS est intéressant mais nécessite une base de données d'obstacles et un système de localisation de l'aéronef dans l'espace aérien. La base de données d'obstacles répertorie des obstacles connus, et ne prend de fait pas en considération des obstacles mobiles ou nouvellement apparus, tels qu'une grue par exemple. Le relief répertorié dans une base de données d'obstacles peut en outre être localisé de façon approximative en raison de la précision de la base de données d'obstacles, par exemple de l'ordre de 40 mètres ou plus. A cette imprécision s'ajoute l'imprécision du système de localisation. Ces limitations sont néanmoins acceptables dans le cadre d'utilisation du système TAWS en particulier lors de phase de croisière.

Par contre, un système TAWS peut ne pas être adapté pour des missions réalisées avec un aéronef à voilure tournante à proximité immédiate d'un obstacle, par exemple lors d'une mission de secours en montagne. A proximité du relief, certains pilotes peuvent même avoir tendance à désactiver temporairement le système TAWS pour éviter la génération de multiples alarmes.

Pour de telles missions, un aéronef à voilure tournante peut comprendre un autre système connu sous l'acronyme RSAS et l'expression anglaise « Rotor Strike Avoiding System ». Un système RSAS peut comprendre un senseur d'obstacles actif configuré pour détecter, en vol, un ou des obstacles afin d'éviter un impact avec la voilure tournante, et un afficheur mettant en évidence les obstacles détectés. Le senseur d'obstacles peut comprendre un ou des capteurs d'obstacles du type connu sous l'acronyme LIDAR et l'expression anglaise « Llght Détection And Ranging ». Un système LIDAR est muni d'un émetteur de faisceau qui émet des impulsions de lumière pulsées dans un champ de détection à faible ouverture.

Bien qu'efficace, seuls les obstacles présents dans le champ de détection sont détectés, et de fait affichés. Les obstacles présents en dessous ou au-dessus de ce champ de détection, voire dans le prolongement du champ de détection, ne sont pas détectés et représentés sur un afficheur. Ce système suffit à court terme pour éviter une collision, par exemple entre une voilure tournante et une paroi rocheuse mais ne fournit pas d'indications sur le reste de l'environnement pour la suite de la mission. Ainsi, un pilote peut par exemple se rendre sur une zone de secours en montagne en passant sous un câble qui serait dans son champ visuel lors de l'approche de la zone de secours, remplir sa mission à proximité de la montagne en toute sécurité grâce au système RSAS et repartir vers sa base en oubliant la présence du câble précédemment observé mais qui est absent de son champ visuel et de la zone de détection du système RSAS lorsqu'il reprend de l'altitude en s'écartant de la paroi rocheuse.

En outre, un senseur d'obstacles peut détecter de nombreux points d'obstacles. L'afficheur présentant ces points d'obstacles peut alors être saturé. Par suite, un pilote peut alors avoir des difficultés pour analyser de manière objective et rapide les données affichées, en parallèle des autres tâches à accomplir. A titre d'exemple, un senseur LIDAR peut détecter à chaque cycle de fonctionnement plusieurs dizaines voire centaines de milliers de points.

En résumé, un système passif de type TAWS peut solliciter une base de données embarquée pour signaler, prendre en considération et éviter des obstacles connus avec une précision moyenne et à grande distance lors d'une phase de croisière, alors qu'un système actif RSAS d'évitement de collision à courte distance peut mettre en oeuvre un capteur d'obstacles actif. Ces deux systèmes sont donc différents et ont des fonctions différentes, et peuvent par suite être complémentaires.

Dans ce contexte, le document FR 3116906 A1 décrit un aéronef muni d'un système de détection d'obstacles comprenant un senseur d'obstacles et un afficheur. Ce senseur d'obstacles scrute un espace environnant. Un afficheur affiche uniquement une représentation des points d'obstacle situés à l'intérieur d'une bande de l'espace aérien. Ainsi, ce document FR 3116906A1 suggère de filtrer les points d'obstacle détectés pour n'afficher que les points d'obstacle présents dans un volume particulier afin de rendre intelligibles les informations affichées et faciliter le travail d'un pilote.

Le document EP3236213 décrit un système d'affichage recevant des données d'une pluralité de capteurs, d'une plateforme de navigation et d'une base de données pour afficher une illustration tridimensionnelle d'une région entourant un aéronef: chaque danger est affiché selon une couleur correspondant à sa criticité. La base de données peut être mise à jour en réalisant un vol avec un senseur de type LIDAR.

Le document EP 3447 750 B1 décrit un procédé et un système de validation d'une trajectoire de vol pour un aéronef.

Le document US 2013/0282208 est éloigné de la problématique de détection d'obstacles en décrivant un procédé de sélection d'une zone d'atterrissage. Ce procédé comprend la réception des données d'un nuage de points provenant d'un système LIDAR en tant que trames d'images séquentielles, la sélection dans chaque trame d'images d'une zone terrestre , un premier filtrage de la zone terrestre pour sélectionner une aire d'atterrissage, et un deuxième filtrage de la zone pour sélectionner une zone d'atterrissage sécurisée.

Le document EP 4009070 concerne un procédé et un système de détection d'obstacles situés autour d'un aéronef avec un senseur d'obstacles. Après avoir scruter l'espace environnant de l'aéronef à l'aide d'un senseur d'obstacles, par exemple de type LIDAR, des données de positionnement relatives à une pluralité d'obstacles sont générées. Ensuite, chaque d'obstacle situé à l'intérieur d'un volume de détection limité en altitude est considéré comme un point pertinent et est affiché à ce titre sur un afficheur. Le volume de détection s'étend entre un plan haut et bas situés respectivement au-dessus et en dessous de l'aéronef. De plus, les obstacles peuvent être affichés de différentes couleurs en fonction de leur nature.

Les documents US 7675461 B1, FR 3071624 et FR 3022357 sont aussi connus.

La présente invention a alors pour objet de proposer un procédé performant pour détecter des obstacles, aussi bien connus qu'inconnus, et pour signaler les obstacles à un membre d'équipage de manière intelligible.

L'invention concerne ainsi un procédé de signalisation pour signaliser dans un aéronef ayant au moins une voilure tournante des obstacles présents dans un espace environnant situé à l'extérieur de l'aéronef.

Le procédé de signalisation comporte une initialisation comprenant une détermination en vol d'un référentiel de cartographie muni d'un axe vertical dans le référentiel terrestre, et une succession de cycles de fonctionnement, chaque cycle de fonctionnement comprenant:
- acquisition avec au moins un capteur d'obstacles LIDAR de données de positionnement dans un référentiel du capteur d'obstacles, chaque donnée de positionnement étant relative à une position d'un point d'obstacle présent sur un obstacle de l'espace environnant par rapport au capteur d'obstacles,
- éventuellement suite à cette acquisition, construction durant ledit vol d'une carte en trois dimensions de l'espace environnant et positionnement dudit aéronef dans ladite carte en appliquant un traitement de localisation et cartographie simultanées à partir au moins desdites données de positionnement, ladite carte étant établie dans le référentiel de cartographie,
- affichage, durant ledit vol, sur un afficheur de l'aéronef, d'un symbole d'aéronef illustrant ledit aéronef et d'une représentation en deux dimensions, restreinte à l'afficheur, d'au moins une partie de ladite carte contenant l'aéronef et illimitée en altitude, chaque point affiché de ladite représentation étant associé à un niveau de risque variant en fonction d'une altitude relative entre un obstacle dudit espace environnant associé à ce point affiché et l'aéronef, chaque point affiché de ladite représentation étant affiché selon une charte graphique prenant en considération le niveau de risque associé.

L'expression « représentation en deux dimensions restreinte à l'afficheur d'au moins une partie de ladite carte contenant l'aéronef et illimitée en altitude» signifie que tous les points ou groupes de points de la carte présents dans une partie de la carte sont affichés par défaut, sous réserve de pouvoir apparaître sur l'afficheur en raison du facteur d'échelle entre l'afficheur et le monde extérieur et indépendamment de leur altitude. La partie de la carte représentée sur l'afficheur par défaut est une vue de la carte contenant tous les points ou groupes de points présents à certaines coordonnées horizontales du référentiel de cartographie, et donc indifféremment des coordonnées verticales de ces points.

Chaque point d'obstacle détecté lors d'un cycle de fonctionnement est positionné dans le référentiel du capteur d'obstacles puis dans le référentiel de cartographie. Par suite, le procédé de signalisation permet de cartographier, durant un vol, l'espace environnant afin de tendre à détecter les obstacles présents dans une zone. Ce procédé de signalisation permet donc de prendre en compte tous les obstacles détectables, et non pas seulement des obstacles connus à une certaine date et référencés dans une base de données embarquée selon des systèmes TAWS antérieurs ou seulement les obstacles détectés dans un champ annulaire durant un cycle d'acquisition selon des systèmes RSAS. Selon l'exemple donné précédemment, si un câble a été détecté et ajouté dans la carte lors de la descente d'un aéronef vers une zone de secours en montagne, lorsque l'aéronef repart à l'issue de sa mission, l'afficheur présentera une illustration du câble.

De plus, le procédé de signalisation comporte une étape d'affichage rendant lisible les informations affichées. La charte graphique appliquée consiste à afficher chaque point dit « point affiché », de la représentation de la carte construite en vol, avec une couleur porteuse du risque que présente l'obstacle correspondant pour l'aéronef. Un point affiché peut être un pixel de l'image affichée sur l'afficheur. Un pilote peut ainsi observer l'afficheur pour en déduire aisément où se trouvent les obstacles par rapport à l'aéronef. Par exemple, les obstacles situés sensiblement à la même altitude que l'aéronef et au-dessus sont affichés selon le code graphique associé au niveau de risque le plus élevé. Les obstacles situés en dessous de l'aéronef sont aussi représentés mais selon un ou des codes graphiques associés à un ou des niveaux de risque respectifs plus faibles.

Le procédé de signalisation peut de plus comporter une ou des caractéristiques additionnelles suivantes, prises seules ou en combinaison.

Selon une possibilité, la détermination en vol d'un référentiel de cartographie peut comporter une détermination en vol d'un angle de roulis courant et d'un angle de tangage courant de l'aéronef, et une détermination du référentiel de cartographie en fonction du référentiel du capteur d'obstacles ainsi que de l'angle de roulis courant et de l'angle de tangage courant, voire d'un modèle mathématique mémorisé prenant en compte le référentiel du capteur d'obstacles ainsi que l'angle de roulis courant et l'angle de tangage courant.

A l'initialisation du procédé de signalisation, le référentiel de cartographie peut être obtenu à partir du référentiel du capteur d'obstacles « horizontalisé ». Le référentiel du capteur d'obstacles est ainsi basculé autour de l'axe de roulis de l'aéronef d'une valeur égale à l'angle de roulis courant, et autour de l'axe de tangage de l'aéronef d'une valeur égale à l'angle de tangage courant, ces valeurs étant mesurées par un senseur usuel tel qu'une centrale inertielle par exemple.

Alternativement, la détermination en vol d'un référentiel de cartographie peut comporter en vol un positionnement de l'aéronef dans une attitude prédéterminée, puis un positionnement du référentiel de cartographie en fonction d'une position courante du référentiel du capteur d'obstacles et d'un modèle mémorisé en sollicitant une interface homme-machine de sélection.

Par exemple, un pilote positionne l'aéronef dans une attitude prédéterminée dans laquelle un axe du référentiel du capteur d'obstacles est vertical dans le référentiel terrestre, et deux axes du référentiel du capteur d'obstacles sont horizontaux dans le référentiel terrestre. Suite à la manipulation de l'interface homme-machine de sélection, les trois axes du référentiel du capteur d'obstacles sont considérés comme se trouvant à la position courante des trois axes correspondants du référentiel de cartographie. Le modèle mémorisé consiste donc dans cet exemple à superposer le référentiel du capteur d'obstacles et le référentiel de cartographie

Selon un autre exemple, un pilote positionne l'aéronef dans une attitude prédéterminée, par exemple avec un angle de tangage particulier différent de zéro. Suite à la manipulation de l'interface homme-machine de sélection, les trois axes du référentiel du capteur d'obstacles sont considérés comme se trouvant dans une position prédéterminée par le modèle mémorisé par rapport à la position courante des trois axes correspondants du référentiel de cartographie. Par exemple, le modèle mémorisé consiste alors à basculer le référentiel du capteur d'obstacles d'un angle de tangage prédéterminé.

Selon une possibilité compatible avec les précédentes, ladite carte peut être partagée en plusieurs bandes contiguës qui sont chacune horizontales dans le référentiel terrestre et associées à un niveau de risque, chaque point affiché de ladite représentation associé à un obstacle présent dans une des bandes étant visuellement affiché selon un code graphique propre à cette bande.

Le terme « bande » désigne une couche de la carte délimitée par deux plans horizontaux dans le référentielle terrestre, ou toute l'espace situé au-dessus ou en dessous d'un tel plan horizontal. Ainsi la bande de la carte dans laquelle se trouve la position courante de l'aéronef peut être positionnée entre deux plans horizontaux ou peut comprendre tout l'espace situé au-dessus d'un plan de référence, au moins une autre bande comprenant tout l'espace de la carte situé entre deux plans horizontaux dans le référentiel terrestre. Une dernière bande peut comprendre tout l'espace situé en dessous d'un plan horizontal. Deux bandes adjacentes sont séparées par un plan horizontal commun.

La carte est virtuellement découpée en plusieurs bandes horizontales. Le code graphique associé à une bande horizontale est différent de chacun des autres codes graphiques pour qu'un pilote puisse facilement identifier le risque des obstacles détectés en fonction de la bande dans laquelle ils sont positionnés.

Eventuellement, au moins une bande peut s'étendre entre deux plans parallèles séparés par une distance variant en fonction d'un vecteur vitesse de l'aéronef.

Les bandes définissant les niveaux de risque peuvent avoir des épaisseurs qui sont déterminées à chaque cycle de fonctionnement en vol en fonction de la vitesse d'avancement de l'aéronef. En effet, un obstacle situé à une certaine distance verticale par rapport à l'aéronef peut présenter un risque plus ou moins élevé en fonction du vecteur vitesse de l'aéronef.

Selon une possibilité compatible avec les précédentes, ledit niveau de risque associé à un point affiché de la représentation peut être maximal lorsque ce point affiché représente un obstacle présent dans une première bande de la carte horizontale dans le référentiel terrestre et contenant l'aéronef, à savoir contenant la position courante de l'aéronef, ce point affiché étant visuellement différent de tout point affiché ayant un niveau de risque différent du niveau de risque maximal.

Ainsi, les obstacles situés sensiblement à la même altitude que l'aéronef et à une altitude supérieure à l'altitude de l'aéronef sont jugés comme étant les plus dangereux et affichés d'une manière particulière pour les différencier des autres obstacles.

L'épaisseur de cette bande est donc théoriquement infinie mais pratiquement limitée du fait de l'altitude de vol maximum, et de la portée maximum du LIDAR.

Alternativement, la première bande peut par exemple être plafonnée à l'altitude de vol maximum de l'aéronef.

Selon une possibilité compatible avec les précédentes, ledit niveau de risque associé à un point affiché de la représentation peut être élevé lorsque ce point affiché représente un obstacle présent dans une deuxième bande de la carte horizontale dans le référentiel terrestre et accolée sous la première bande, le niveau de risque élevé étant plus faible que le niveau de risque maximal, chaque point affiché associé à un niveau de risque maximal étant visuellement différent de chaque point affiché associé à un niveau de risque élevé.

Les obstacles situés directement en dessous de la première bande horizontale sont alors jugés comme étant moins dangereux que les obstacles présents dans la première bande horizontale. Néanmoins, ces obstacles situés directement en dessous de la première bande horizontale sont affichés pour que le pilote puisse visualiser l'intégralité de l'environnement.

Selon une possibilité compatible avec les précédentes, (i) ledit niveau de risque associé à un point affiché de la représentation peut être moyen lorsque ce point affiché représente un obstacle présent dans une troisième bande de la carte horizontale dans le référentiel terrestre et accolée sous la deuxième bande, le niveau de risque moyen étant plus faible que le niveau de risque élevé, chaque point affiché associé à un niveau de risque moyen étant visuellement différent de chaque point affiché associé à un niveau de risque élevé et à un niveau de risque maximal, et (ii) ledit niveau de risque associé à un point affiché de la représentation étant faible lorsque ce point représente un obstacle présent dans une quatrième bande de la carte horizontale dans le référentiel terrestre et accolée sous la troisième bande, le niveau de risque faible étant plus faible que le niveau de risque moyen, chaque point affiché associé à un niveau de risque faible étant visuellement différent de chaque point affiché associé à un niveau de risque maximal, élevé et moyen.

Selon une possibilité compatible avec les précédentes, si un point affiché de la représentation correspond à au moins deux points d'obstacles différents associés respectivement à deux niveaux de risque différents, ce point affiché présente le niveau de risque le plus élevé parmi les niveaux de risque des points d'obstacles associés.

Un même point affiché peut correspondre à plusieurs points d'obstacles différents. Dans ce cas, le point affiché est affiché selon le code graphique associé à l'obstacle le plus dangereux pour l'aéronef.

Selon une possibilité compatible avec les précédentes, ledit procédé de signalisation peut comprendre une suppression de chaque point de la carte situé à une distance de l'aéronef supérieure à un seuil prédéterminé.

Cette caractéristique permet par exemple de limiter les temps de traitement ou d'éviter que trop d'imprécisions s'accumulent dans la carte construite.

Selon une possibilité compatible avec les précédentes, ladite représentation peut comprendre une vue selon un plan d'affichage horizontal dans le référentiel terrestre, telle qu'une vue dite de dessus par l'homme du métier, illustrant chaque point d'obstacle de l'espace environnant restreint à l'afficheur.

La représentation est dans ce cas établie en fonction de tous les points d'obstacles. La représentation peut résulter de la projection orthogonale de chaque point ou groupe de points de la carte sur le plan d'affichage horizontal.

Selon une possibilité compatible avec les précédentes, ladite représentation peut comprendre une vue selon un plan d'affichage vertical dans le référentiel terrestre, telle qu'une vue dite de côté, de face, ou d'arrière par l'homme du métier, illustrant chaque point d'obstacle présent dans une tranche de l'espace environnant centrée sur l'aéronef, d'une largeur prédéterminée et restreinte à l'afficheur. La tranche est délimitée entre deux plans verticaux dans le référentiel terrestre.

Selon une possibilité compatible avec les précédentes, ladite représentation peut comprendre des vues de face, d'arrière ou de côté d'une partie de la carte comprise entre deux plans parallèles et verticaux prédéterminés. Si la vue est de côté les deux plans verticaux délimitant la tranche sont sensiblement parallèles à l'axe longitudinal de l'aéronef, à savoir l'axe de roulis de l'aéronef. Si la vue est de face ou d'arrière alors les plans verticaux délimitant la tranche sont sensiblement parallèles à l'axe transversal de l'aéronef, à savoir l'axe de tangage, de l'aéronef. La position de ces plans verticaux délimitant la tranche est prédéterminée et définie de façon relative à la position de l'aéronef. Ces vues sont des vues en projection orthogonale sur un plan d'affichage vertical dans le référentiel terrestre des points de la carte. La représentation peut résulter de la projection de chaque point d'obstacle présent dans le couloir formé par cette tranche sur le plan d'affichage vertical concerné.

Le fait de limiter l'affichage aux obstacles entre deux plans verticaux constitue un filtre. L'intérêt de ce filtre est manifeste car en son absence l'afficheur pourrait transmettre des informations difficilement exploitables. Par exemple, un obstacle particulier peut se trouver devant l'aéronef, en dehors du couloir délimité par les deux plans verticaux prédéterminés, et à une altitude synonyme d'un niveau de risque élevé. Si tous les points d'obstacle sont pris en compte, la représentation de l'espace environnant vue d'arrière comprendra un point affiché signalant un risque maximal pour cet obstacle particulier. A l'inverse, avec le filtre décrit précédemment, la représentation ne signalera pas l'obstacle particulier précité car il est en dehors du couloir associé. Un pilote aura donc une représentation de l'environnement proche qui lui permet d'appréhender où sont situés les obstacles potentiellement menaçants.

Eventuellement, le procédé peut comporter la sélection de la vue à afficher, avec une interface adéquate, parmi la vue selon un plan d'affichage horizontal et au moins une vue selon un plan d'affichage vertical.

Selon une possibilité compatible avec les précédentes, ledit procédé peut comporter une génération d'un ordre d'inhibition de chaque point affiché associé à un niveau de risque choisi, et une inhibition d'un affichage des points affichés associés au niveau de risque choisi.

Par défaut, tous les points de la partie de la carte à afficher sont représentés sur l'afficheur. Un pilote peut éventuellement manoeuvrer une interface homme-machine de sélection pour n'afficher que des informations relatives aux obstacles présentant le niveau de risque choisi, par exemple pour que l'afficheur illustre uniquement les obstacles présentant un risque maximal pour l'aéronef.

Selon un autre aspect, le traitement de type « localisation et cartographie simultanées » comporte la mise en oeuvre d'un algorithme d'estimation d'odométrie. L'algorithme d'estimation d'odométrie permet de déterminer à chaque cycle de fonctionnement au moins une transformée de type translation-rotation entre un nuage de points d'obstacle et un autre nuage de points ou des points d'une carte. L'algorithme d'estimation d'odométrie utilise une méthode itérative qui minimise l'écart de distance des points d'obstacle détectés lors du cycle de fonctionnement courant avec soit les points résultant de l'acquisition précédente soit des points extraits de la carte en vigueur. La ou les transformées sont notamment utilisées pour mettre à jour la carte à chaque cycle de fonctionnement et déterminer la position courante de l'aéronef dans cette carte.

Selon une possibilité compatible avec les précédentes, durant un premier cycle de fonctionnement de ladite succession de cycles de fonctionnement, ledit traitement de type « localisation et cartographie simultanées » est configuré pour utiliser dans un algorithme d'estimation d'odométrie au moins une donnée inertielle.

L'élaboration d'une première estimée de la transformée de type translation-rotation prend alors en compte au moins une donnée inertielle.

Par exemple, les angles de roulis, de tangage et de lacet, ainsi que les vitesses et accélérations angulaires en roulis, tangage et lacet sont utilisés pour construire la première estimée, le temps de calcul ainsi que la robustesse de convergence de l'algorithme d'estimation d'odométrie sont grandement améliorées.

Lors de chaque cycle de fonctionnement suivant, l'algorithme d'estimation d'odométrie peut seulement utiliser un nuage de points d'obstacle résultant d'un cycle de fonctionnement précédent, et le nuage de points d'obstacle établi durant le cycle de fonctionnement courant afin d'améliorer itérativement ladite transformation de type translation rotation. Autrement dit, l'algorithme d'estimation d'odométrie n'utilise alors plus une ou des données inertielles.

Selon une possibilité compatible avec les précédentes, si le nuage de points d'obstacle acquis lors du premier cycle de fonctionnement comporte un nombre de points d'obstacle inférieur à un seuil mémorisé, une alerte peut être générée. Eventuellement, le procédé est automatiquement arrêté puis redémarré.

Selon une possibilité compatible avec les précédentes, le premier cycle de fonctionnement est réalisé simultanément à la détermination en vol d'un référentiel de cartographie.

Selon une possibilité compatible avec les précédentes, ladite initialisation peut comporter un affichage sur l'afficheur d'un fond prédéterminé, ledit symbole d'aéronef et ladite représentation recouvrant ledit fond.

Par défaut, l'afficheur peut présenter un fond ayant une couleur et/ou un motif qui indique que la région est indéterminée, tel que par exemple une couleur grise. Ainsi, un pilote peut savoir que dans toutes les zones illustrées selon ce code graphique, l'espace environnant peut contenir des obstacles. Cette situation peut se produire dans des zones qui n'ont pas encore été atteintes par le capteur d'obstacles.

Selon une possibilité compatible avec les précédentes, ledit procédé de signalisation peut comprendre à chaque cycle de fonctionnement la détermination d'un indice de confiance relatif au traitement de localisation et cartographie simultanées, et une génération d'une alerte et/ou un arrêt et/ou un redémarrage lorsque cet indice de confiance n'est pas conforme à un critère prédéterminé.

Par exemple, une première alerte est émise lorsque l'indice de convergence est dans une première plage de valeurs pour signaler que le procédé a une précision acceptable mais moyenne.

Par exemple, une deuxième alerte est émise lorsque l'indice de convergence est dans une deuxième plage de valeurs pour signaler que le procédé a une précision inacceptable. Par exemple, le procédé est arrêté voire redémarré automatiquement lorsque l'indice de convergence est dans la deuxième plage de valeurs.

L'indice de confiance peut ainsi permettre le cas échéant d'avertir l'équipage de l'aéronef que la précision et la robustesse du procédé de signalisation se dégrade et que les informations communiquées via l'afficheur sont donc moins fiables et précises que dans le cas nominal.

Selon une possibilité, l'indice de confiance peut être calculé à l'aide d'au moins un des facteurs suivants : une raideur d'un problème inverse résolu par un algorithme d'estimation d'odométrie du traitement de localisation et cartographie simultanées, un nombre de points d'obstacle détectés lors du cycle de fonctionnement courant qui correspondent à des points de la carte, à savoir la carte en vigueur. L'expression « points d'obstacle détectés lors du cycle de fonctionnement courant qui correspondent à des points de la carte » désigne des points qui sont considérés identiques de manière usuelle par le traitement de localisation et cartographie simultanées.

L'indice de de confiance peut être égal à un des facteurs précédents ou à une combinaison des deux facteurs par exemple.

En effet, la raideur du problème inverse résolu par l'algorithme d'estimation d'odométrie du traitement de localisation et cartographie simultanées peut être déterminée de manière usuelle. Un problème est dit raide si c'est un problème qui est mal conditionné au sens de l'analyse numérique et en particulier des problèmes inverses. Plus le problème est raide plus la confiance dans le traitement de localisation et cartographie simultanées est faible. Ainsi, la raideur peut être comparée à une ou des plages de raideur mémorisées et déterminées par essais ou simulations par exemple.

Selon une autre possibilité, le nombre de points d'obstacle détectés lors d'un cycle de fonctionnement qui correspondent à des points de la carte déjà élaborée peut être un bon indice de confiance. Si ce nombre est faible alors la confiance dans le traitement de localisation et cartographie simultanées est faible. Ainsi, le nombre de points d'obstacles détectés durant un cycle de fonctionnement correspondant à des points de la carte déjà élaborée peut être comparé à une ou des plages de valeurs mémorisées et déterminées par essais ou simulations par exemple.

A titre d'exemple, si le capteur d'obstacles scanne une surface plane, l'algorithme d'estimation d'odométrie ne va pas permettre d'aligner avec une précision acceptable le nuages de points d'obstacle établi lors du cycle de fonctionnement courant et la carte déjà élaborée, voire ne va pas converger vers une solution. Dans ce cas, l'indice de confiance devient hors norme et une alerte est générée.

Par exemple, l'afficheur affiche un message d'alerte en lieu et place du symbole d'aéronef et de la représentation de la carte construite.

Selon une possibilité compatible avec les précédentes, si l'aéronef présente une vitesse d'avancement, par exemple une vitesse sol, supérieure à un seuil de vitesse limite mémorisé, une alerte peut être générée. Eventuellement, le procédé de signalisation est arrêté quand la vitesse d'avancement est supérieure au seuil de vitesse limite mémorisé, puis réinitialisé quand la vitesse d'avancement repasse sous le seuil de vitesse limite.

L'invention concerne en outre un procédé d'approche pour diriger un aéronef vers une zone particulière de l'espace aérien.

Le procédé d'approche comporte une phase préliminaire de vol au-dessus de la zone particulière et une application du procédé de signalisation durant cette phase préliminaire, puis une phase de descente vers la zone particulière et une application du procédé de signalisation durant cette phase de descente.

Ainsi, un pilote peut piloter l'aéronef pour survoler et cartographier la zone particulière, avant de descendre vers cette zone particulière de manière sécurisée en surveillant les obstacles à l'aide de l'afficheur. En effet le capteur d'obstacles LIDAR a une portée limitée et des obstacles comme une colline ou une construction peuvent masquer la zone d'intérêt, ainsi une approche directe de la zone particulière ne permet pas toujours d'avoir une bonne connaissance de l'environnement.

L'invention concerne en outre un système de signalisation configuré pour un aéronef pour cartographier et signaler des obstacles présents dans un espace environnant aux alentours d'un aéronef. Ce système de signalisation d'obstacles est configuré pour appliquer le procédé de signalisation.

L'invention concerne en outre un aéronef ayant au moins une voilure tournante comportant un tel système de signalisation d'obstacles.

L'invention et ses avantages apparaîtront avec plus de détails dans le cadre de la description qui suit avec des exemples donnés à titre illustratif en référence aux figures annexées qui représentent :
la figure 1, un schéma illustrant un système de signalisation selon l'invention,
la figure 2, un schéma illustrant les référentiels de cartographie et de capteur d'obstacles,
la figure 3, un schéma illustrant un procédé de signalisation selon l'invention,
la figure 4, un schéma illustrant des bandes horizontales de l'espace environnant associées à des niveaux de risque selon l'invention,
la figure 5, un schéma illustrant un aéronef en vol lors de l'application d'un procédé de signalisation selon l'invention,
la figure 6, un schéma illustrant un afficheur montrant une représentation en vue de dessus de l'espace environnant de la figure 4,
la figure 7, un schéma illustrant un afficheur montrant une représentation en vue arrière de l'espace environnant de la figure 4,
la figure 8, un schéma illustrant un afficheur montrant une représentation en vue de côté de l'espace environnant de la figure 4, et
la figure 9, un schéma illustrant un procédé d'approche selon l'invention.

Les éléments présents dans plusieurs figures distinctes sont affectés d'une seule et même référence.

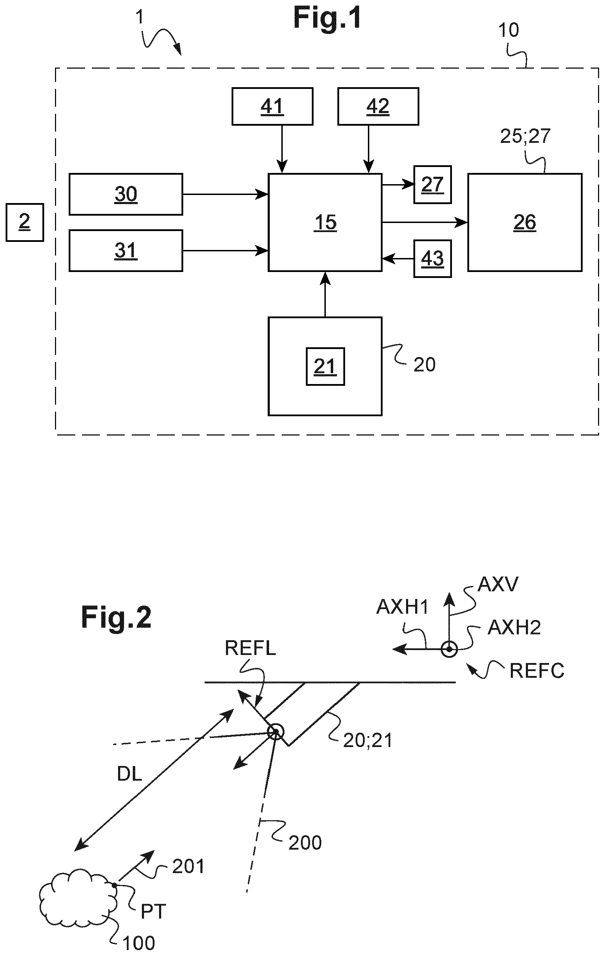

La figure 1 présente un aéronef 1 apte à mettre en oeuvre les procédés de l'invention. Cet aéronef 1 peut comporter une voilure tournante 2. Cet aéronef est susceptible d'impacter un obstacle lors d'un vol à proximité immédiate de cet obstacle.

Par ailleurs, l'aéronef 1 comporte un système de signalisation 10 configuré pour cartographier et signaler des obstacles présents dans un espace environnant.

Le système de signalisation 10 comporte un senseur d'obstacles 20. Ce senseur d'obstacles 20 peut comprendre un capteur d'obstacles 21 selon l'exemple illustré, ou plusieurs capteurs d'obstacles 21 éventuellement disposés dans des régions différentes de l'aéronef 1.

Le terme « capteur » désigne un capteur physique capable de mesurer directement le paramètre en question mais aussi un système pouvant comprendre un ou plusieurs capteurs physiques ainsi que des moyens de traitement du signal permettant de fournir une estimation du paramètre à partir des mesures fournies par ces capteurs physiques. De manière similaire, une mesure d'un paramètre peut représenter une mesure brute d'un capteur physique ou une mesure obtenue par un traitement de signal plus ou moins complexe à partir de mesures brutes.

Un tel capteur d'obstacle 21 comprend un capteur de type LIDAR qui émet des impulsions de lumière. Un capteur d'obstacle 21 LIDAR peut à cet effet comprendre à titre d'exemple une pluralité de diodes LASER.

Par exemple, l'aéronef 1 comporte une barque portant un unique capteur d'obstacles 21. Ce capteur d'obstacles 21 peut à titre illustratif être incliné d'environ 30 degrés par rapport à l'horizontale terrestre lorsque l'aéronef 1 présente un angle de roulis et un angle de tangage nuls. Ainsi, ce capteur d'obstacle 21 peut être incliné vers la bas et l'avant au regard de l'aéronef 1.

Le système de signalisation 10 comprend un contrôleur 15 comprenant au moins une unité de traitement. Une telle unité de traitement peut comprendre par exemple au moins un processeur et au moins une mémoire, au moins un circuit intégré, au moins un système programmable, au moins un circuit logique, ces exemples ne limitant pas la portée donnée à l'expression « unité de traitement ». Le terme processeur peut désigner aussi bien une unité centrale de traitement connue sous l'acronyme CPU, une unité graphique de traitement GPU, une unité digitale connue sous l'acronyme DSP, un microcontrôleur...

Le contrôleur 15 est en communication avec le senseur d'obstacles 20. Ainsi, le contrôleur 15 est configuré pour construire et mettre à jour en vol une carte de l'espace environnant à l'aide de données dites « de positionnement » émises par le ou les capteurs d'obstacles 21.

En référence à la figure 2, lorsqu'un faisceau lumineux 200 impacte un point d'un obstacle 100 dénommé « point d'obstacle PT » par commodité, un écho 201 est réfléchi vers le capteur d'obstacles 21. Le capteur d'obstacle 21 en déduit des données de positionnement permettant de localiser l'obstacle 100 dans le référentiel REFL du capteur d'obstacles 21. Ces données de positionnement peuvent comprendre la distance DL séparant le point d'obstacle du capteur d'obstacles 21 ainsi qu'un angle de gisement et un angle de site dans le référentiel REFL du capteur d'obstacles 21.

Le contrôleur 15 peut être configuré pour replacer les points d'obstacles dans un référentiel de cartographie REFC. Ce référentiel de cartographie REFC peut comprendre deux axes AXH1, AXH2 horizontaux dans le référentiel terrestre et un axe AXV vertical dans le référentiel terrestre.

Par ailleurs et en référence à la figure 1, le contrôleur 15 peut être en liaison filaire ou non filaire avec un senseur de données inertielles 30. Un tel senseur de données inertielles 30 peut comprendre trois gyroscopes pour déterminer respectivement un angle de tangage, un angle de roulis et un angle de lacet de l'aéronef 1, et trois accéléromètres pour déterminer respectivement une accélération en tangage, une accélération en roulis et une accélération en lacet de l'aéronef 1. Par exemple, un tel senseur de données inertielles 30 peut comprendre une centrale inertielle, ou un système connu sous l'acronyme AHRS et l'expression anglaise « Attitude and Heading Reference System ».

Par ailleurs, le contrôleur 15 peut être en liaison filaire ou non filaire avec un senseur de vitesse 31. Le senseur de vitesse 31 peut comprendre au moins un capteur pour déterminer un vecteur vitesse de l'aéronef 1 dans le référentiel de cartographie. Par exemple, le senseur de vitesse 31 comporte un récepteur d'un dispositif de positionnement par satellites, un système navigation utilisant l'effet Doppler-Fizeau, une centrale inertielle...

Par ailleurs, le contrôleur 15 est en liaison filaire ou non filaire avec un afficheur 25. Cet afficheur 25 peut comprendre un moyen d'affichage 26, tel qu'un écran, une visière de casque, un verre de lunette, un collimateur tête haute ou autres.

Le contrôleur 15 peut comprendre par exemple un calculateur de traitement et un calculateur générateur de symboles au sein d'une ou plusieurs unités de traitement. Le calculateur générateur de symboles peut être intégré à l'afficheur 25 ou déporté. Selon un exemple, l'afficheur 25 et le calculateur générateur de symboles peuvent former un même équipement, le calculateur de traitement étant un calculateur dédié ou non au procédé de l'invention.

Par ailleurs, le contrôleur 15 peut être relié par une liaison filaire ou non filaire à une interface homme-machine de sélection 41 et/ou une interface homme-machine d'inhibition 42 et/ou une interface homme-machine de réglage 43. Chaque interface 41-43 peut comprendre des organes usuels, tactiles ou autres, permettant à un pilote de transmettre un signal, analogique ou numérique, au contrôleur 15.

Indépendamment de la manière de réaliser le système de signalisation 10, ce système de signalisation 10 est configuré pour appliquer le procédé de signalisation de l'invention.

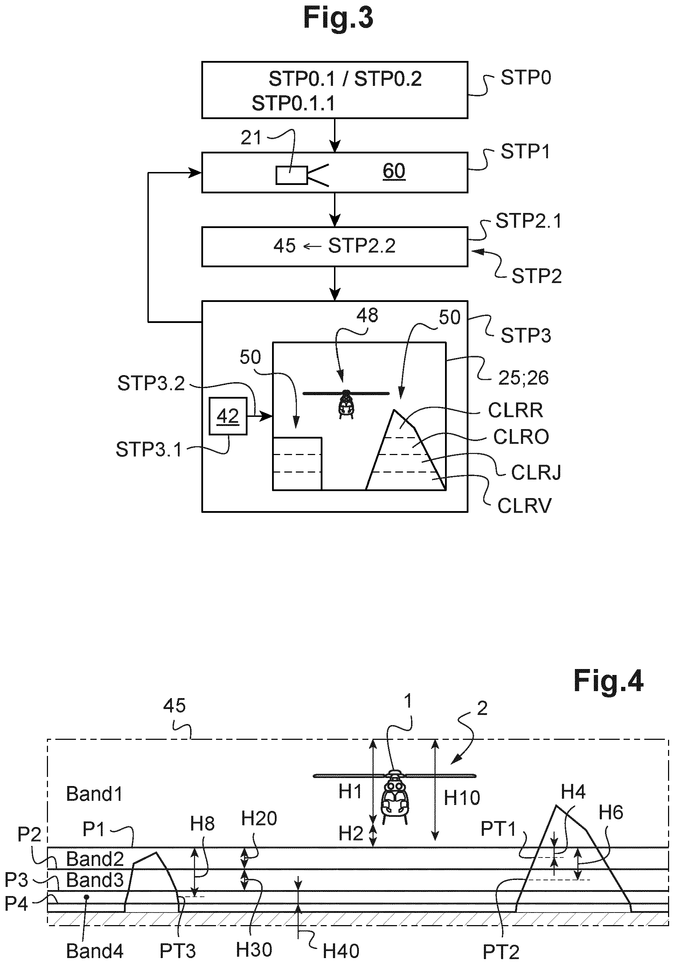

En référence à la figure 3, le procédé de signalisation comporte une étape d'initialisation comprenant une détermination STPO en vol du référentiel de cartographie REFC.

Selon une première solution, la détermination STPO en vol d'un référentiel de cartographie REFC comporte la détermination STP0.1 en vol d'un angle de roulis courant et d'un angle de tangage courant de l'aéronef 1, par exemple à l'aide du senseur de données inertielles 30. Ensuite, cette étape comporte la détermination STP0.1.1 du référentiel REFC de cartographie en fonction du référentiel REFL du capteur d'obstacles 21 ainsi que de l'angle de roulis courant et de l'angle de tangage courant, voire d'un modèle mathématique. Par exemple, le contrôleur 15 applique le modèle mathématique pour déterminer le référentiel REFC de cartographie via une double rotation du référentiel REFL du capteur d'obstacles 21 autour de l'axe de roulis de l'aéronef selon l'angle de roulis courant, et autour de l'axe de tangage de l'aéronef 1 selon l'angle de tangage courant.

Selon une deuxième solution, la détermination STPO en vol d'un référentiel de cartographie comporte en vol un positionnement de l'aéronef dans une attitude prédéterminée, puis un positionnement STP0.2 du référentiel REFC de cartographie en fonction d'une position courante du référentiel REFL du capteur d'obstacles 21 et d'un modèle mémorisé en sollicitant une interface homme-machine de sélection. En présence de plusieurs capteurs d'obstacles, le référentiel REFL d'un des capteurs d'obstacles 21 prédéterminé est utilisé. Par exemple, un pilote contrôle l'aéronef 1 pour le placer dans une position prédéterminée, à savoir avec un angle de roulis et un angle de tangage prédéterminés par le constructeur. Lorsque l'aéronef 1 est dans la position préconisée, le pilote manoeuvre l'interface homme-machine de sélection 41. Cette interface homme-machine de sélection 41 transmet un signal d'initialisation, numérique ou analogique, au contrôleur 15. Le contrôleur 15 le décode de manière usuelle et en déduit la position du référentiel REFC de cartographie en appliquant le modèle mémorisé. Eventuellement, au moment de la sollicitation de l'interface homme-machine de sélection 41 ou du traitement du signal d'initialisation, le contrôleur 15 considère que le référentiel REFL du capteur d'obstacles 21 et le référentiel REFC de cartographie sont confondus.

Eventuellement, la phase d'initialisation comporte un affichage d'un fond prédéterminé sur l'afficheur 25.

Indépendamment de la manière d'initialiser le référentiel REFC de cartographie, le procédé de signalisation comporte en vol des cycles de fonctionnement successifs réalisés périodiquement. A chaque cycle de fonctionnement, un sondage de l'espace environnant 60 est réalisé avec le ou les capteurs d'obstacles 21 LIDAR. Cette étape comporte une acquisition STP1 de données de positionnement relatives aux points d'obstacles détectés. Ces données de positionnement sont ensuite reçues et décodées par le contrôleur 15.

Suite à cette acquisition, le procédé de signalisation 10 comporte une construction STP2, toujours durant le vol d'une carte 45 en trois dimensions dudit espace environnant 60 et le positionnement de l'aéronef 1 dans la carte 45 dans sa position courante. La carte 45 est établie dans le référentiel REFC de cartographie. Chaque point de la carte 45 est positionné par rapport au centre de ce référentiel REFC de cartographie. Pendant le vol, la carte 45 est mémorisée dans une mémoire du contrôleur 15. Après chaque vol, ou avant chaque vol, la carte 45 peut être effacée.

A cet effet, le contrôleur 15 applique un traitement de localisation et cartographie simultanées STP2.1, dit SLAM en langue anglaise, à partir à minima des données de positionnement et de la carte 45 établie au cycle de fonctionnement précédent. Un tel traitement de localisation et cartographie simultanées permet de construire et mettre à jour la carte à chaque cycle de fonctionnement.

Un tel traitement de localisation et cartographie simultanées peut comprendre usuellement (a) une phase de prétraitement d'un nuage de points d'obstacle courant comprenant les points d'obstacles obtenus lors du cycle de fonctionnement courant, (b) une phase d'odométrie pour déterminer au moins une fonction de transfert entre le nuage de points d'obstacle courant et un nuage de points d'obstacle obtenu lors du cycle de fonctionnement précédent ou à partir de la carte 45 établie à la fin du cycle de fonctionnement précédent, via par exemple un algorithme connu sous l'acronyme ICP et l'expression anglaise « Iterative Closest Point », puis (c) une mise à jour de la carte 45 pour ajouter à la carte 45 obtenue lors du cycle de fonctionnement précédent les nouveaux points d'obstacles et pour positionner l'aéronef 1 dans la nouvelle carte 45 à l'aide de la position atteinte lors du cycle de fonctionnement précédent et de ladite au moins une fonction de transfert.

Par ailleurs, lors de la construction de la carte 45, les points de la carte 45 éloignés de l'aéronef 1 peuvent être supprimés, pour alléger les ressources nécessaires et faciliter le travail du contrôleur 15. Dans ce cas, le procédé de signalisation peut comprendre une suppression STP2.2 de chaque point de la carte 45 situé à une distance de l'aéronef supérieure à un seuil mémorisé.

Le traitement de type « localisation et cartographie simultanées » peut être du type appelé en langue anglaise « Surfel-based mapping », et par exemple décrit dans le document « Efficient surfel-based Slam using 3D laser range data in urban environments » de Jens Behley et Cyrill Stachniss.

Alternativement, le traitement de type « localisation et cartographie simultanées » peut être du type appelé en langue anglaise « Voxel grid method », et par exemple décrit dans le document « Velodyne slam » de Frank Moosmann et Christoph Stiller, notamment visible dans le document « Proc. Of IEEE Intelligent Vehicles Symposium (IV) », pages 393-398, 2011.

Eventuellement, lors du premier cycle de fonctionnement, si le ou les capteurs d'obstacles 21 LIDAR détectent un nombre de points d'obstacles inférieur à un seuil mémorisé, le procédé peut être entièrement redémarré.

Eventuellement, lors du premier cycle de fonctionnement, le traitement de type « localisation et cartographie simultanées » peut coupler un algorithme d'estimation d'odométrie avec au moins une donnée inertielle fournie par le senseur de données inertielles 30. Eventuellement, le traitement de type « localisation et cartographie simultanées » peut prendre en considération les angles de roulis, de tangage et de lacet, ainsi que les vitesses et accélérations angulaires en roulis, tangage et lacet. Par exemple, la ou les données inertielles sont utilisées lors du premier cycle de fonctionnement par l'algorithme d'estimation d'odométrie, pour avoir une estimation initiale plus précise du déplacement de l'aéronef et conjointement une estimation initiale plus précise de la ou des transformations de type translation-rotation.

Lors du deuxième cycle de fonctionnement et des cycles de fonctionnement suivants, l'algorithme d'estimation d'odométrie peut ne pas prendre en compte la ou les données inertielles.

Par ailleurs, le procédé de signalisation comporte un affichage STP3, durant le vol et sur l'afficheur 25, d'une part d'un symbole d'aéronef 48 illustrant l'aéronef 1 à sa position courante et, d'autre part, d'une représentation 50 restreinte à l'afficheur 25 d'au moins une partie de la carte 45 contenant l'aéronef 1. Le cas échéant, ledit symbole d'aéronef 1 et ladite représentation 50 recouvre si nécessaire le fond.

Ainsi, la représentation 50 illustre par défaut tous les obstacles présents dans une partie de la carte 45, quelle que soit leur altitude, et non pas uniquement les obstacles présents dans une certaine plage d'altitudes.

En outre, chaque point affiché de la représentation 50 est présenté selon une charte graphique prenant en considération le niveau de risque de l'obstacle 100 correspondant pour l'aéronef 1. En particulier, le niveau de risque varie en fonction d'une altitude du point d'obstacle associé relativement à une altitude d'une référence de l'aéronef 1. Le contrôleur 15 peut aisément déterminer la hauteur séparant un point d'obstacle et un plan horizontal passant par une référence liée à l'aéronef 1, à partir de la position du point d'obstacle et de l'aéronef 1 dans la carte 45.

Selon l'exemple illustré, les obstacles 100 ayant une altitude sensiblement équivalente ou supérieure à l'altitude de l'aéronef 1 sont affichés selon un premier code graphique, par exemple en présentant une couleur rouge CLRR. Les obstacles 100 ayant une altitude un peu plus faible que l'altitude de l'aéronef 1 sont affichés selon un deuxième code graphique par exemple en présentant une couleur orange CLRO, les obstacles 100 ayant une altitude moyennement plus faible que l'altitude de l'aéronef 1 sont affichés selon un troisième code graphique par exemple en présentant une couleur jaune CLRJ, puis les obstacles 100 ayant une altitude fortement plus faible que l'altitude de l'aéronef 1 sont affichés selon un quatrième code graphique par exemple en présentant une couleur verte CLRV.

En référence à la figure 4, le code graphique à appliquer peut dépendre d'une distance minimale H4, H6, H8 entre un obstacle 100 de l'espace environnant 60 associé à ce point affiché et un plan horizontal P1 dans le référentiel terrestre. Ce plan horizontal P1 est attaché à l'aéronef 1, par exemple en étant situé en dessous de l'aéronef 1 à titre illustratif à une distance H2 de deux mètres.

Par ailleurs, la carte 45 établie en vol peut être partagée en plusieurs bandes BAND1, BAND2, BAND3, BAND4. Chaque bande est horizontale dans le référentiel terrestre et associée à un niveau de risque qui lui est propre, et donc à un code graphique qui lui est propre.

Par ailleurs, chaque bande BAND1, BAND2, BAND3, BAND4 est délimitée verticalement par au moins un plan horizontal P1, P2, P3, dans le référentiel terrestre. La première bande BAND1 est délimitée au moins par le plan de référence P1, voire par un plan supérieur optionnel situé au-dessus du plan horizontal. Les autres bandes BAND2, BAND3, BAND4 s'étendent entre deux plans P1-P2, P2-P3, P3-P4 parallèles séparés par une épaisseur H10, H20, H30, H40.

Eventuellement, la quatrième bande BAND4 peut comprendre tout l'espace situé sous le plan horizontal P3.

Le contrôleur 15 peut repérer au moins une bande en fonction d'une épaisseur mémorisée de la bande, et par rapport à l'aéronef 1. Alternativement, le contrôleur 15 peut être configuré pour déterminer l'épaisseur d'au moins une bande en fonction d'un vecteur vitesse de l'aéronef 1, déterminé le cas échéant à l'aide du senseur de vitesse 31.

En outre, tous les points affichés de la représentation 50 présents dans une même bande sont visuellement affichés selon le code graphique propre à cette bande.

Par exemple, le niveau de risque associé à un point affiché de la représentation 50 est maximal lorsque ce point affiché représente un obstacle 100 présent dans une première bande BAND1 de la carte 45 horizontale dans le référentiel terrestre et contenant l'aéronef 1. La première bande peut s'étendre au-dessus du premier plan P1, ou entre le premier plan P1 et un deuxième plan situé à une hauteur H1 fixe ou variable au-dessus de la référence de l'aéronef 1. Tels que décrient précédemment, les points de la première bande BAND1 peuvent avoir une couleur rouge.

Le niveau de risque associé à un point affiché de la représentation 50 peut être élevé lorsque ce point affiché représente un obstacle 100 présent dans une deuxième bande BAND2 de la carte 45 horizontale dans le référentiel terrestre et accolée à la première bande BAND1, en étant en dessous de la première bande BAND1. Tels que décrient précédemment, les points d'une deuxième bande BAND2 peuvent avoir une couleur orange.

Le niveau de risque associé à un point affiché de la représentation 50 peut être moyen lorsque ce point affiché représente un obstacle 100 présent dans une troisième bande BAND3 de la carte 45 horizontale dans le référentiel terrestre et accolée à la deuxième bande BAND2, en étant en dessous de la deuxième bande BAND2. Tels que décrient précédemment, les points d'une troisième bande BAND3 peuvent avoir une couleur jaune.

Le niveau de risque associé à un point affiché de la représentation 50 peut être faible lorsque ce point affiché représente un obstacle 100 présent dans une quatrième bande BAND4 de la carte 45 horizontale dans le référentiel terrestre et accolée à la troisième bande BAND3, en étant en dessous de la troisième bande BAND3. Tels que décrient précédemment, les points d'une quatrième bande BAND4 peuvent avoir une couleur verte.

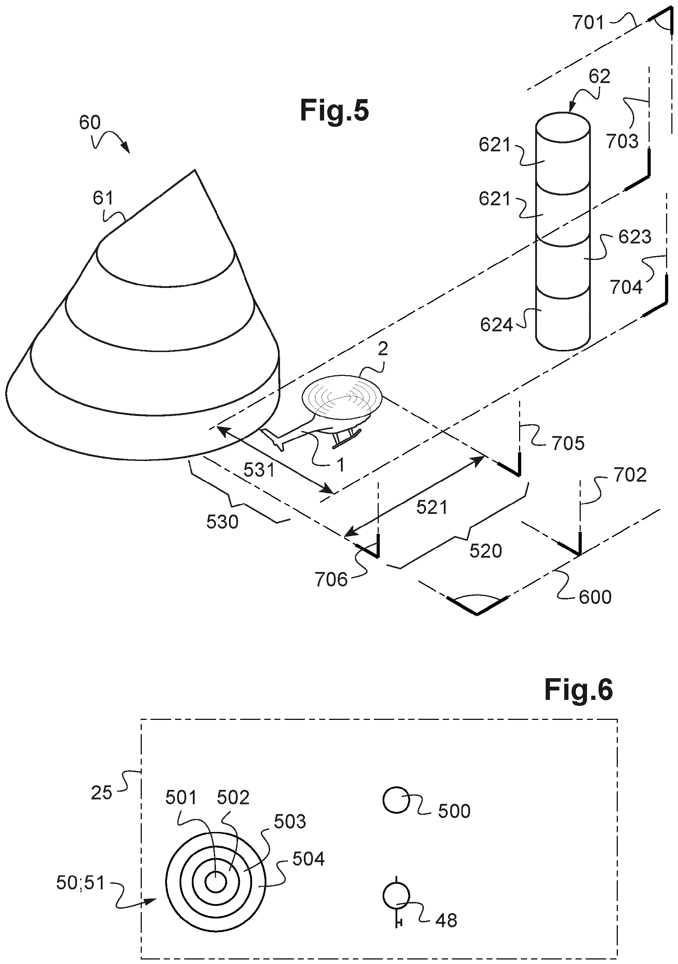

Les figures 5 à 8 illustrent le procédé de signalisation. La figure 5 illustre une carte 45. Cette carte 45 contient deux obstacles 100, à savoir une montagne 61 et un pylône 62 cylindrique. La carte 45 peut être virtuellement segmentée selon la convention précédente à l'aide d'un demi-espace et de 3 types de bandes. En particulier, le pylône 62 contient un secteur 621-624 par bande, et notamment un secteur 621 présent dans la première bande à risque maximal.

En référence à la figure 6, la représentation 50 affichée sur l'afficheur 25 peut comprendre une vue 51 de dessus selon un plan d'affichage horizontal 600 dans le référentiel terrestre. Le contrôleur 15 peut être configuré pour projeter chaque point de la carte 45 sur ce plan d'affichage horizontal 600 afin d'obtenir une image affichée sur l'afficheur 25.

En outre et quelle que soit la vue, un point affiché de la représentation 50 peut correspondre à au moins deux points d'obstacles différents associés respectivement à deux niveaux de risque différents. Vu de dessus, un point de la représentation 50 relatif au pylône 62 correspond à tous les points d'obstacle du pylône 62 présents sur un segment vertical. Dès lors, le contrôleur 15 affiche ce point affiché selon le code graphique du niveau de risque le plus élevé parmi les niveaux de risque des points d'obstacles associés. Autrement dit, la représentation 50 comporte un cercle rouge 500 pour illustrer le pylône 62 de la figure 5. La représentation comporte en outre un cercle 501 et des anneaux 502, 503, 504 pour illustrer la montagne 61.

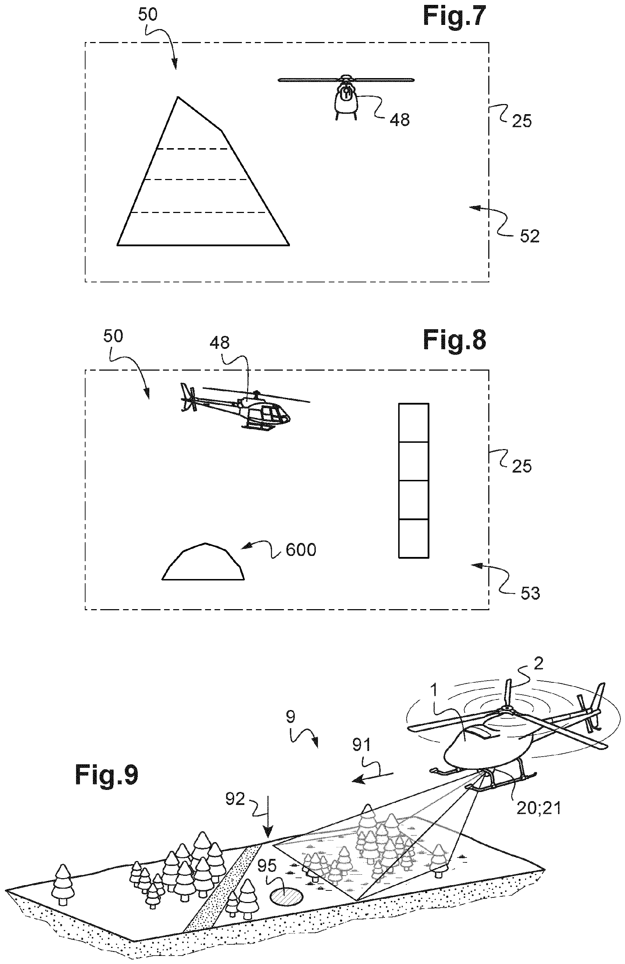

Selon les figures 7 et 8, la représentation 50 est une vue 52, 53 selon un plan d'affichage vertical 701, 702 dans le référentiel terrestre illustrant chaque point d'obstacle présent dans une tranche 520, 530 de la carte 45 de la figure 5 contenant l'aéronef 1, d'une largeur prédéterminée 521, 531 entre deux plans verticaux 705-706, 703-704 et restreinte à l'afficheur 25. Le contrôleur 15 peut être configuré pour projeter chaque point de la tranche concernée de la carte 45, y compris l'aéronef, sur ce plan d'affichage vertical 701, 702 afin d'obtenir une image affichée sur l'afficheur 25.

Selon la figure 7, le contrôleur 15 peut être configuré pour obtenir une vue d'arrière de l'aéronef 1. La tranche 520 permettant d'obtenir cette vue ne contenant pas le pylône 62, la représentation ne contient pas une illustration de ce pylône 62.

Selon la figure 8, le contrôleur 15 peut être configuré pour obtenir une vue de côté de l'aéronef 1. La tranche 530 permettant d'obtenir cette vue contenant qu'une partie de la montagne 61, la représentation ne représente qu'une partie 600 de cette montagne 61.

Eventuellement, le pilote peut manoeuvrer le cas échéant l'interface homme-machine de réglage 43 pour choisir la vue à afficher, parmi un catalogue de vues comprenant une vue de dessus, un vue de face ou arrière selon la figure 7 et une vue de côté gauche ou droite selon la figure 8.

Quelle que soit la vue, le procédé peut comporter la génération STP3.1 d'un ordre d'inhibition de chaque point affiché associé à un niveau de risque choisi, et une inhibition STP3.2 d'un affichage des points affichés associés au niveau de risque choisi, à l'aide de l'interface homme machine d'inhibition 42. Ainsi, un pilote peut enlever de la représentation de tous les obstacles associés à un ou des niveaux de risque choisis. A minima, les obstacles associés au niveau de risque maximal peuvent être en permanence affichés.

Selon un autre aspect et une option possible, le procédé de signalisation peut comprendre à chaque cycle de fonctionnement la détermination d'un indice de confiance relatif au traitement de localisation et cartographie simultanées. Le contrôleur peut être configuré pour déterminer cet indice de confiance et le comparer à un critère prédéterminé. Dès lors, le contrôleur 15 peut piloter un alerteur 27 pour générer une alerte lorsque cet indice de confiance n'est pas conforme à un critère prédéterminé. L'alerteur peut être un alerteur, dédié ou non à cette application, apte à générer une alerte sonore, visuelle et/ou tactile. L'afficheur 25 peut éventuellement générer une dite alerte.

La figure 9 illustre un procédé d'approche 90 pour diriger un aéronef 1 vers une zone particulière 95 de l'espace aérien, une aire d'atterrissage ou de travail par exemple. Ce procédé d'approche 90 comporte une phase préliminaire 91 de vol au-dessus de la zone particulière 95 durant laquelle le procédé de signalisation 50 est mis en oeuvre. Ainsi, le contrôleur 15 construit la carte 45 de l'environnement de la zone particulière 95.Ensuite, le procédé d'approche 90 comporte une phase de descente 92 vers la zone particulière 95 et une application du procédé de signalisation 50. Le pilote peut ainsi visualiser sur l'afficheur 25 les obstacles 100 détectés en vol de la carte 45 de l'environnement, par rapport à l'aéronef 1, en fonction de leur niveau de risque.

Naturellement, la présente invention est sujette à de nombreuses variations quant à sa mise en oeuvre. Bien que plusieurs modes de réalisation aient été décrits, on comprend bien qu'il n'est pas concevable d'identifier de manière exhaustive tous les modes possibles. Il est bien sûr envisageable de remplacer un moyen décrit par un moyen équivalent sans sortir du cadre de la présente invention et des revendications.

## Revendications

1. Procédé de signalisation (50) pour signaliser dans un aéronef (1) ayant au moins une voilure tournante des obstacles présents dans un espace environnant situé à l'extérieur de l'aéronef (1),
**caractérisé en ce que** le procédé de signalisation comporte une initialisation comprenant une détermination en vol d'un référentiel (REFC) de cartographie muni d'un axe vertical (AXV) dans le référentiel terrestre, et une succession de cycles de fonctionnement, chaque cycle de fonctionnement comprenant :
- acquisition (STP1) avec au moins un capteur d'obstacles LIDAR (21) de données de positionnement dans un référentiel (REFL) du capteur d'obstacles (21), chaque donnée de positionnement étant relative à une position d'un point d'obstacle (PT) présent sur un obstacle (100) de l'espace environnant (60) par rapport au capteur d'obstacles (21),
- construction (STP2) durant ledit vol d'une carte (45) en trois dimensions dudit espace environnant (60) et positionnement dudit aéronef (1) dans ladite carte (45), en appliquant un traitement de localisation et cartographie simultanées (STP2.1) à partir au moins desdites données de positionnement, ladite carte (45) étant établie dans le référentiel (REFC) de cartographie,
- affichage (STP3), durant ledit vol, sur un afficheur (25) de l'aéronef (1), d'un symbole d'aéronef (48) illustrant ledit aéronef (1) et d'une représentation (50) en deux dimensions, restreinte à l'afficheur (25), d'au moins une partie de ladite carte (45) contenant l'aéronef et illimitée en altitude, chaque point affiché de ladite représentation étant associé à un niveau de risque variant en fonction d'une altitude relative entre un obstacle dudit espace environnant (60) associé à ce point affiché et l'aéronef (1), chaque point affiché de ladite représentation étant affiché selon une charte graphique prenant en considération le niveau de risque associé.

2. Procédé selon la revendication 1,
**caractérisé en ce que** la détermination en vol d'un référentiel de cartographie comporte une détermination (STP0.1) en vol d'un angle de roulis courant et d'un angle de tangage courant de l'aéronef, et une détermination du référentiel (REFC) de cartographie en fonction du référentiel (REFL) du capteur d'obstacles (21) ainsi que de l'angle de roulis courant et de l'angle de tangage courant.

3. Procédé selon la revendication 1,
**caractérisé en ce que** la détermination en vol d'un référentiel de cartographie comporte en vol un positionnement de l'aéronef dans une attitude prédéterminée puis un positionnement (STP0.2) du référentiel (REFC) de cartographie en fonction d'une position courante du référentiel (REFL) du capteur d'obstacles (21) et d'un modèle mémorisé en sollicitant une interface homme-machine de sélection (41).

4. Procédé selon l'une quelconque des revendications 1 à 3,
**caractérisé en ce que** ladite carte (45) est partagée en plusieurs bandes (BAND1, BAND2, BAND3, BAND4) contiguës qui sont chacune horizontales dans le référentiel terrestre et associées à un niveau de risque, chaque point affiché de ladite représentation associé à un obstacle présent dans une des bandes (BAND1, BAND2, BAND3, BAND4) étant visuellement affiché selon un code graphique propre à cette bande (BAND1, BAND2, BAND3, BAND4).

5. Procédé selon la revendication 4,
**caractérisé en ce qu'**au moins une bande (BAND1, BAND2, BAND3, BAND4) s'étend entre deux plans parallèles séparés par une distance (H10, H20, H30, H40) variant en fonction d'un vecteur vitesse de l'aéronef (1).

6. Procédé selon l'une quelconque des revendications 1 à 5,
**caractérisé en ce que** ledit niveau de risque associé à un point affiché de la représentation (50) est maximal lorsque ce point affiché représente un obstacle présent dans une première bande (BAND1) de la carte (45) horizontale dans le référentiel terrestre et contenant l'aéronef (1), ce point affiché étant visuellement différent de tout point affiché ayant un niveau de risque différent du niveau de risque maximal.

7. Procédé selon la revendication 6,
**caractérisé en ce que** ledit niveau de risque associé à un point affiché de la représentation (50) est élevé lorsque ce point affiché représente un obstacle présent dans une deuxième bande (BAND2) de la carte (45) horizontale dans le référentiel terrestre et accolée sous la première bande (BAND1), le niveau de risque élevé étant plus faible que le niveau de risque maximal, chaque point affiché associé à un niveau de risque maximal étant visuellement différent de chaque point affiché associé à un niveau de risque élevé.

8. Procédé selon la revendication 7,
**caractérisé en ce que** (i) ledit niveau de risque associé à un point affiché de la représentation (50) est moyen lorsque ce point affiché représente un obstacle présent dans une troisième bande (BAND3) de la carte (45) horizontale dans le référentiel terrestre et accolée sous la deuxième bande (BAND2), le niveau de risque moyen étant plus faible que le niveau de risque élevé, chaque point affiché associé à un niveau de risque moyen étant visuellement différent de chaque point affiché associé à un niveau de risque élevé et à un niveau de risque maximal, et (ii) ledit niveau de risque associé à un point affiché de la représentation (50) étant faible lorsque ce point représente un obstacle présent dans une quatrième bande (BAND4) de la carte (45) horizontale dans le référentiel terrestre et accolée sous la troisième bande (BAND3), le niveau de risque faible étant plus faible que le niveau de risque moyen, chaque point affiché associé à un niveau de risque faible étant visuellement différent de chaque point affiché associé à un niveau de risque maximal, élevé et moyen.

9. Procédé selon l'une quelconque des revendications 7 à 8,
**caractérisé en ce que** si un point affiché de la représentation (50) correspond à au moins deux points d'obstacles différents associés respectivement à deux niveaux de risque différents, ce point affiché présente le niveau de risque le plus élevé parmi les niveaux de risque des points d'obstacles associés.

10. Procédé selon l'une quelconque des revendications 1 à 9,
**caractérisé en ce que** ledit procédé de signalisation peut comprendre une suppression de chaque point de la carte situé à une distance de l'aéronef supérieure à un seuil prédéterminé.

11. Procédé selon l'une quelconque des revendications 1 à 10,
**caractérisé en ce que** ladite représentation (50) est une vue (51) selon un plan d'affichage horizontal dans le référentiel terrestre illustrant chaque point d'obstacle de l'espace environnant (60) restreint à l'afficheur (25).

12. Procédé selon l'une quelconque des revendications 1 à 11,
**caractérisé en ce que** ladite représentation (50) est une vue (52, 53) selon un plan d'affichage vertical dans le référentiel terrestre illustrant chaque point d'obstacle présent dans une tranche (520, 530) de l'espace environnant (60) contenant l'aéronef (1), d'une largeur prédéterminée (521, 531) et restreinte à l'afficheur (25).

13. Procédé selon l'une quelconque des revendications 1 à 12,
**caractérisé en ce que** ledit procédé comporte une génération (STP3.1) d'un ordre d'inhibition de chaque point affiché associé à un niveau de risque choisi, et une inhibition (STP3.2) d'un affichage des points affichés associés au niveau de risque choisi.

14. Procédé selon l'une quelconque des revendications 1 à 13,
**caractérisé en ce que** durant un premier cycle de fonctionnement de ladite succession de cycles de fonctionnement, ledit traitement de type « localisation et cartographie simultanées » est configuré pour utiliser dans un algorithme d'estimation d'odométrie au moins une donnée inertielle.

15. Procédé selon l'une quelconque des revendications 1 à 14,
**caractérisé en ce que** ladite initialisation comporte un affichage sur l'afficheur d'un fond prédéterminé, ledit symbole d'aéronef (1) et ladite représentation (50) recouvrant ledit fond.

16. Procédé selon l'une quelconque des revendications 1 à 15,
**caractérisé en ce que** ledit procédé de signalisation comprend à chaque cycle de fonctionnement la détermination d'un indice de confiance relatif au traitement de localisation et cartographie simultanées, et une génération d'une alerte lorsque cet indice de confiance n'est pas conforme à un critère prédéterminé.

17. Procédé selon la revendication 16,
**caractérisé en ce que** ledit indice de confiance est calculé à l'aide d'au moins un des facteurs suivants : une raideur d'un problème inverse résolu par un algorithme d'estimation d'odométrie du traitement de localisation et cartographie simultanées, un nombre de points d'obstacle détectés lors du cycle de fonctionnement courant qui correspondent à des points de la carte.

18. Procédé d'approche (90) pour diriger un aéronef (1) vers une zone particulière (95) de l'espace aérien,
**caractérisé en ce que** le procédé d'approche (90) comporte une phase préliminaire (91) de vol au-dessus de la zone particulière (95) et une application du procédé de signalisation (50) selon l'une quelconque des revendications 1 à 17 durant cette phase préliminaire (91), puis une phase de descente (92) vers la zone particulière (95) et une application du procédé de signalisation (50) selon l'une quelconque des revendications 1 à 17 durant cette phase de descente (92).

19. Système de signalisation (10) configuré pour un aéronef pour cartographier et signaler des obstacles présent dans un espace environnant,
**caractérisé en ce que** le système de signalisation (10) est configuré pour appliquer le procédé de signalisation selon l'une quelconque des revendications 1 à 17.

20. Aéronef (1) ayant au moins une voilure tournante (2),
**caractérisé en ce que** ledit aéronef (1) comporte un système de signalisation (10) selon la revendication 19.
